# EUROPEAN PATENT SPECIFICATION

(11) **EP 0 965 085 B1**
(45) Date of publication and mention of the grant of the patent: **12.11.2003**
(21) Application number: 99900010.2
(22) Date of filing: 07.01.1999
(51) Int. Cl.: G06F 13/12

(54) **PERSONAL COMPUTER AND PERSONAL COMPUTER ADD-ON CARD**
PERSONALRECHNER UND PERSONALKARTE DAZU
ORDINATEUR PERSONNEL ET CARTE D'EXTENSION POUR ORDINATEUR PERSONNEL

(30) Priority: 08.01.1998 EP 98200028
(43) Date of publication of application: 22.12.1999
(73) Proprietor: Koninklijke Philips Electronics N.V., 5621 BA Eindhoven (NL)
(72) Inventor: HUIJGEN, Hendrik, NL-5656 AA Eindhoven (NL); BOSVELD, Frank, NL-5656 AA Eindhoven (NL); GOUDSMITS, Mathieu, P., F., M., NL-5656 AA Eindhoven (NL)
(74) Representative: Deguelle, Wilhelmus H. G.
(86) International application number: IB9900005
(87) International publication number: WO99035586

(56) References cited:
- DE-A1- 19 833 780
- GB-A- 2 330 722
- US-A- 5 359 367
- US-A- 5 699 384

## Description

The present invention relates to a personal computer comprising an add-on card comprising a printed circuit board with a smart card reader and a tuner, the smart card reader being accessible through a slot in a mounting bracket of the add-on card.

The present invention also relates to a personal computer add-on card. An personal computer and an add-on card according to the preamble are known from the brochure "DVB SCPC/MCPC Satellite Receiver Card" by ComStream.

Such personal computers and add-on cards are used to enable reception of digital TV signals or data signals from a satellite or a CATV network by a personal computer. In order to do so, the add on card comprises a tuner for tuning to the different carriers on which the TV and/or data signals are modulated.

Additionally a smart card reader is often present on such a add-on card. This smart card reader can be used in conditional access system in the case of a subscription based service or a pay per use service. A smart card reader can also be used with electronic banking services in which details such as a personal identification code is stored in encrypted form on a smart card. In the known personal computer, the smart card has to be inserted into the smart card reader through a slot in the bracket which is used for mounting the add-on card in the personal computer. This slot is accessible at the back side of the PC.

Due to the fixed size of the smart card reader and the limited width of the add-on card it is necessary to place the tuner behind the smart card reader. This placement requires the use of an interconnection between an RF connector mounted on the bracket and the input of the tuner. This interconnection leads to an additional RF signal loss and increases the manufacturing costs.

The object of the present invention is to provide a personal computer according to the preamble in which the above mentioned problems are solved.

To achieve the above mentioned object, the personal computer according to the invention is characterized in that the tuner is placed directly behind the mounting bracket, in that the smart card reader is placed next to the tuner, and in that the sum of the width of the tuner and the smart card reader is smaller than the width of the printed circuit board.

By using a reduced size smart card reader which is intended for reduced size smart cards, it becomes possible to place the smart card reader next to the tuner, enabling the placement of the tuner directly behind the bracket. Consequently the interconnection between a connector on the bracket and the input of the tuner can be dispensed with. An additional advantage of the use of a reduced size smart card is the reduction of the possibility of breaking of the smart card when the PC in which the add-on card is mounted is moved. In the add-on card according to the prior art the smart card protrudes over a relative length outside the add-on card, making it more vulnerable.

An embodiment of the invention is characterized in that the smart card reader is arranged for reading smart cards of the ID-000 type.

Smart cards of the ID-000 type are presently exclusively used in SIM (Subscriber Identification Modules) in cellular telephone terminals which operate e.g. according to the GSM standard. These smart cards have dimensions of 25 mm * 15 mm.

A still further embodiment of the invention is characterized in that an RF connector is mounted on the tuner, and in that the RF connector protrudes through an opening in the bracket.

By mounting the RF connector on the tuner, and putting it trough an opening in the bracket, an easy and cheap way of mounting and connecting of the tuner is obtained.

The invention will now be explained with reference to the drawings.
Fig. 1 shows an add-on card according to the prior art.
Fig. 2 shows an add-on card according to the present invention.
Fig. 3 shows the rear view of a personal computer according to the invention.
Fig. 4 shows a block diagram of a PC add-on card intended for use with the DVB broadcasting standard.

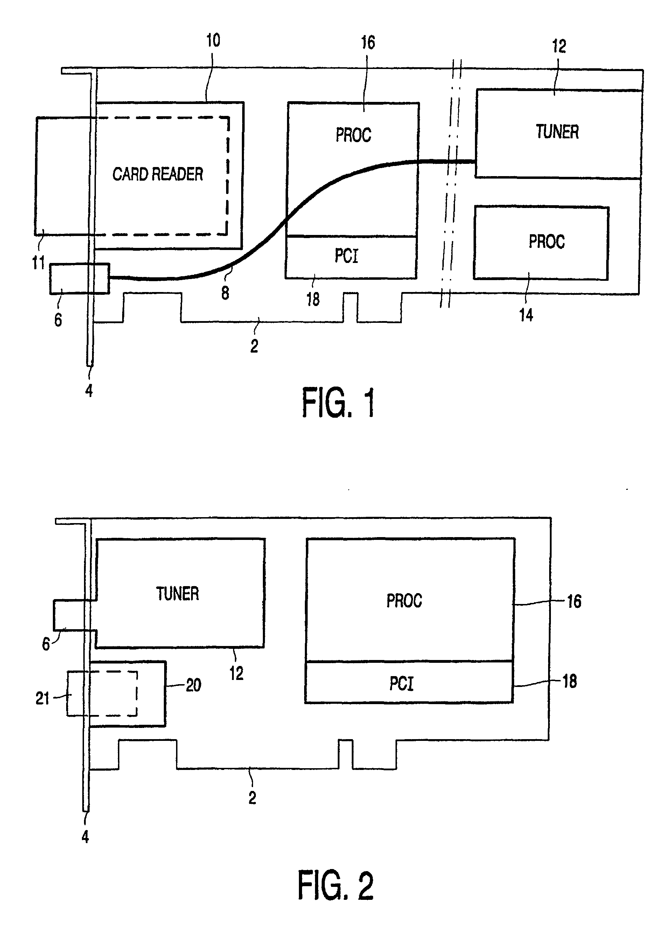

The prior art add-on card according to Fig. 1 comprises a printed circuit board 2 on which a tuner 12, a card reader 10, processing means 14 and 16 and a PCI interface are placed. The RF signal carrying the digital video or data signal to be received, is applied to an RF connector 6 on a mounting bracket 4 attached to the printed circuit board 2. The RF connector 6 is connected to a tuner 12 via a cable 8.

The processing means 14 and 16 are arranged for deriving the desired digital signals from an IF signal available at an output of the tuner 12. The card reader 10 is also connected to the processing means 16 for reading conditional access information from the smart card 11. The digital signals derived by the processing means 16 are passed to the PCI interface 18 which are arranged for providing suitable data and control signals to the connector 2 for connection to a PCI bus in the personal computer.

As can be seen from Fig. 1, the width of the smart card reader 10 is such that almost no other elements can be placed next to the smart card reader, especially not the tuner 12. Consequently, the tuner has to be placed behind the smart card reader and a cable 8 is required to connect the connector 6 on the bracket 4 to the tuner 12. The use of the cable 8 results in extra signal loss and increases the costs of the add-on card.

The add-on card according to Fig. 2 comprises a printed circuit board 2 on which the tuner 12 is mounted next to a reduced size smart card reader 20, directly behind the bracket 4. This is possible because, instead of using a normal size smart card and associated reader, a small smart card of the type ID-000 is used. Because the tuner is placed directly behind the bracket 4, an interconnection cable between connector 6 and the tuner 12 can be dispensed with.

Preferably, the connector 6 is integrated in the tuner 12. By integrating the connector 6 in the tuner 6, the assembling of the add-on card becomes more easy.

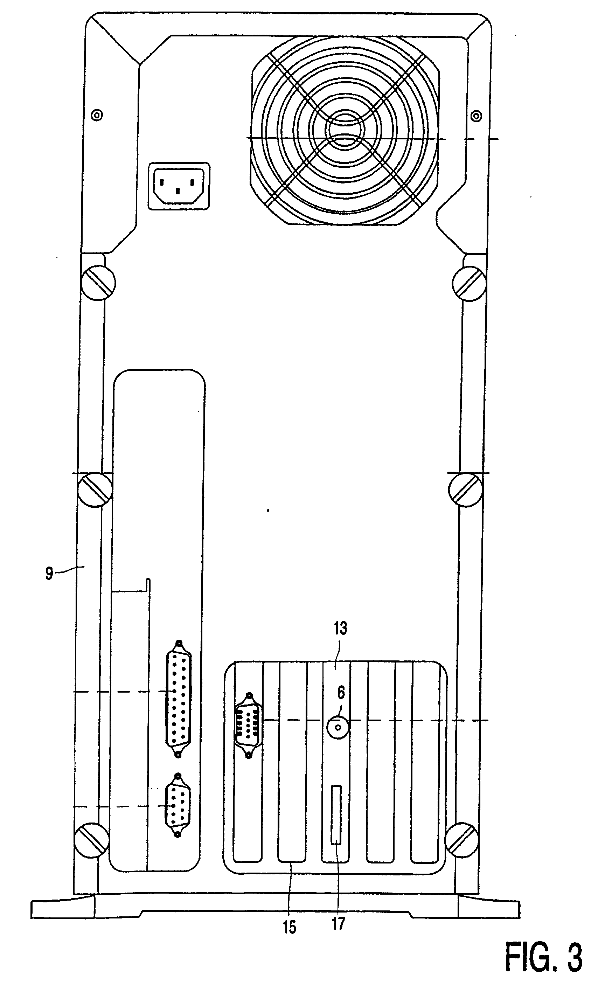

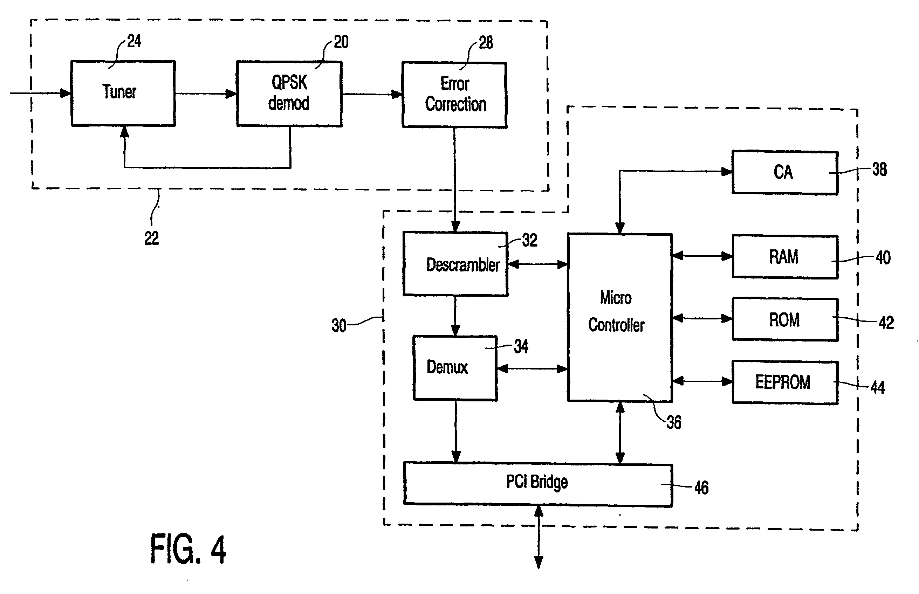

In the personal computer 9 according to Fig. 3, the add-on card 13 according to the invention is placed in a PCI slot on the PCs' main board. The slot 17 is present to accept the reduced size smart card. The signal from a CATV system or a broadcast satellite can be applied to the RF connector 6.
In the add-on card according to Fig. 4, an RF input signal is applied to a receiver module 22.
In the receiver module 22, the RF input signal is connected to a tuner 24, which is arranged for tuning to a desired frequency under control of control signals received from a micro-controller 36.

An IF output of the tuner 24 is connected to an input of a QPSK demodulator 26. The QPSK demodulator 26 demodulates the IF signal received from the tuner 24 and provides the digital symbols obtained by demodulation to a first output. The first output of the QPSK demodulator 26 is connected to an error correcting circuit 28. A second output of the QPSK demodulator 26, carrying AGC (Automatic Gain Control) and AFC (Automatic Frequency Control) signals, is connected to the tuner 24. The AGC signal is used to control the gain of the tuner such that the input level of the QPSK demodulator has a predetermined value. The AFC signal is used to control the local oscillator in the tuner 24 to eliminate frequency offsets detected in the QPSK demodulator 26. The error correcting circuit 28 detects and corrects transmission errors and provides virtually error free symbols to its output. The output of the error correcting circuit 28 is connected to the output of the receiver module 22.

The output of the receiver module 22 is connected to an input of a processing module 30. In the processing module 30, the output signal of the receiver module is connected to an input of a descrambler 32. The descrambler 32 descrambles the signal received from the receiver module in dependence on information received from a conditional access unit 38. The conditional access unit 38 reads the conditional access information from the smart card, and provides descrambled information to the descrambler if the information read from the smart card indicates that the user is entitled to receive the information carried by the output signal of the receiver module 22.

The output of the descrambler 32 is connected to a input of a demultiplexer 34 which extracts the selected streams from the output signal of the descrambler 32. This selected streams are passed to a PCI bridge 46 which converts the selected streams into a format that can be placed on a PCI bus.
The PCI bridge 46 is also connected to a micro-controller 36 which is arranged for controlling the receiver module 22, descrambler 32, the demultiplexer 34 and the conditional access unit 38 in response to instructions received from the PCI bridge. In order to do so, the micro-controller 36 is also provided with RAM 40, ROM 42 and non-volatile RAM 44.

## Claims

1. Personal computer add-on card comprising a printed circuit board with a smart card reader and a tuner, the smart card reader being accessible through a slot in a mounting bracket of the add-on card, **characterized in that** the tuner is placed directly behind the mounting bracket, **in that** the smart card reader is placed next to the tuner, and **in that** the sum of the width of the tuner and the smart card reader is smaller than the width of the printed circuit board.

2. Personal computer add on card according to claim 1, **characterized in that** the smart card reader is arranged for reading smart cards of the ID-000 type.

3. Personal computer add-on card according to claim 1 or 2, **characterized in that** an RF connector is mounted on the tuner, and **in that** the RF connector protrudes through an opening in the bracket.

4. Personal computer add-on card according to claim 1,2 or 3, **characterized in that** the smart card reader is arranged for reading conditional access information from the smart card, **in that** the personal computer add-on card comprises control means which are arranged to provide certain services only if the conditional access information read from the smart card meets an entitlement criterion.

5. Personal computer comprising an add-on card according to claim 1.

6. Personal computer according to claim 5, **characterized in that** the smart card reader is arranged for reading smart cards of the ID-000 type.

7. Personal computer according to claim 5 or 6, **characterized in that** an RF connector is mounted on the tuner, and **in that** the RF connector protrudes through an opening in the bracket.

8. Personal computer according to claim 5, 6 or 7, **characterized in that** the smart card reader is arranged for reading conditional access information from the smart card, **in that** the personal computer add-on card comprises control means which are arranged to provide certain services only if the conditional access information read from the smart card meets an entitlement criterion.

## Patentansprüche

1. PC-Add-On-Karte mit einer Printplatte mit einem Chipkartenleser und einer Abstimmeinheit, wobei der Chipkartenleser über einen Schlitz in einem Montagebügel der Add-On-Karte hindurch zugänglich ist, **dadurch gekennzeichnet, dass** die Abstimmeinheit unmittelbar hinter dem Montagebügel vorgesehen ist, dass der Chipkartenleser hinter der Abstimmeinheit vorgesehen ist und dass die Summe der Breite der Abstimmeinheit und des Chipkartenlesers kleiner ist als die Breite der Printplatte.

2. PC-Add-On-Karte nach Anspruch 1, **dadurch gekennzeichnet, dass** der Chipkartenleser zum Auslesen von Chipkarten von dem ID-000-Typ vorgesehen ist.

3. PC-Add-On-Karte nach Anspruch 1 oder 2, **dadurch gekennzeichnet, dass** auf der Abstimmeinheit ein HF-Anschluss vorgesehen ist und dass der HF-Anschluss aus einer Öffnung in dem Bügel herausragt.

4. PC-Add-On-Karte nach Anspruch 1, 2 oder 3, **dadurch gekennzeichnet, dass** der Chipkartenleser vorgesehen ist zum Auslesen von Information über bedingten Zugriff von der Chipkarte, dass die PC-Add-On-Karte Steuermittel aufweist, die vorgesehen sind zum Liefern bestimmter Dienste nur dann, wenn die Information über bedingten Zugriff von der Chipkarte einem Bezeichnungskriterium entspricht.

5. PC mit einer Add-On-Karte nach Anspruch 1.

6. PC nach Anspruch 5, **dadurch gekennzeichnet, dass** der Chipkartenleser zum Auslesen von Chipkarten von dem ID-000 Typ vorgesehen ist.

7. PC nach Anspruch 5 oder 6, **dadurch gekennzeichnet, dass** an der Abstimmeinheit ein HF-Anschluss vorgesehen ist und dass der HF-Anschluss aus einer Öffnung in dem Bügel herausragt.

8. PC nach Anspruch 5, 6 oder 7, **dadurch gekennzeichnet, dass** der Chipkartenleser vorgesehen ist zum Auslesen von Information über bedingten Zugriff von der Chipkarte, dass die PC-Add-On-Karte Steuermittel aufweist, die dazu vorgesehen sind, bestimmte Dienst zu liefern, nur dann, wenn die von der Chipkarte ausgelesene Information über den bedingten Zugriff einem Bezeichnungskriterium entspricht.

## Revendications

1. Carte d'extension d'ordinateur personnel, comprenant une carte de circuit imprimé dotée d'un lecteur de cartes à puce et d'un dispositif d'accord, le lecteur de cartes à puce étant accessible par le biais d'une fente dans un support de montage de la carte d'extension, **caractérisée en ce que** le dispositif d'accord est placé directement derrière le support de montage, **en ce que** le lecteur de cartes à puce est placé à côté du dispositif d'accord, et **en ce que** la somme de la largeur du dispositif d'accord et du lecteur de cartes à puce est inférieure à la largeur de la carte de circuit imprimé.

2. Carte d'extension d'ordinateur personnel suivant la revendication 1, **caractérisée en ce que** le lecteur de cartes à puce est apte à lire des cartes à puce du type ID-000.

3. Carte d'extension d'ordinateur personnel suivant la revendication 1 ou 2, **caractérisée en ce qu'**un connecteur RF est monté sur le dispositif d'accord, et **en ce que** le connecteur RF fait saillie à travers une ouverture dans le support.

4. Carte d'extension d'ordinateur personnel suivant la revendication 1, 2 ou 3, **caractérisée en ce que** le lecteur de cartes à puce est apte à lire des informations d'accès conditionnel sur la carte à puce et **en ce que** la carte d'extension d'ordinateur personnel comporte des moyens de commande, lesquels sont aptes à fournir certains services uniquement si les informations d'accès conditionnel lues sur la carte à puce satisfont à un critère d'habilitation.

5. Ordinateur personnel comportant une carte d'extension suivant la revendication 1.

6. Ordinateur personnel suivant la revendication 5, **caractérisé en ce que** le lecteur de cartes à puce est apte à lire des cartes à puce du type ID-000.

7. Ordinateur personnel suivant la revendication 5 ou 6, **caractérisé en ce qu'**un connecteur RF est monté sur le dispositif d'accord, et **en ce que** le connecteur RF fait saillie à travers une ouverture dans le support.

8. Ordinateur personnel suivant la revendication 5, 6 ou 7, **caractérisé en ce que** le lecteur de cartes à puce est apte à lire des informations d'accès conditionnel sur la carte à puce, **en ce que** la carte d'extension d'ordinateur personnel comporte des moyens de commande, lesquels sont aptes à fournir certains services uniquement si les informations d'accès conditionnel lues sur la carte à puce satisfont un critère d'habilitation.
